(19)

**Europäisches Patentamt**

**European Patent Office**

**Office européen des brevets**

(11) **EP 4 650 525 A1**

(12) **EUROPEAN PATENT APPLICATION**

(43) Date of publication:
**19.11.2025 Bulletin 2025/47**

(21) Application number: **24020151.7**

(22) Date of filing: **15.05.2024**

(51) International Patent Classification (IPC):
***E02D 27/34*** *(2006.01)*

(52) Cooperative Patent Classification (CPC):
**E02D 27/34; G06F 30/13;** G06F 2119/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sepac, Zvonimir**
**10290 Zapresic (HR)**

(72) Inventor: **Sepac, Zvonimir**
**10290 Zapresic (HR)**

(74) Representative: **Sucic, Tatjana**
**Callidea Ltd.**
**Pustoselina 7a**
**10000 Zagreb (HR)**

(54) **A STRUCTURE EARTHQUAKE-RESISTANCE DESIGN METHOD FOR CALCULATING A RESULTANT SEISMIC FORCE**

(57) The present invention relates to a design method for use in calculating a resultant seismic force $Q$ at a horizontal connecting surface (3) for designing of a foundation (2) and seismic force $F_1$ for dimensioning of a building structure (1). For designing of the foundation (2), it is necessary to calculate of a resistive force $R_{Q2}$ at the horizontal connecting surface (3) for calculating a strength of the horizontal connecting surface (3) necessary for preventing a foundation (2) of a building structure (1) from yielding or/and preventing of loosening of a resistance of a structural connection of the building structure (1) with the foundation (2). For dimensioning of the building structure (1), the resistive force $R_{Q1}$ as the resistive forces $F_i$ and $M_{moment}$ have to be established. Additionally, a stability for a pile foundation structure (2) has to be properly proved. The horizontal connecting surface (3) is a surface connecting the building structure (1) arranged above the foundation (2) of the building structure (1) and the building structure (1).

FIG. 3

EP 4 650 525 A1

**Description**

Technical field of the invention

The present disclosure relates to a structure earthquake-resistance design method for proving a resultant seismic force and additionally stability for a pile foundation structure. More particularly, the present disclosure relates to a structure earthquake-resistance design method wherein the resultant seismic force is calculated considering a mechanical impedance.

Background of the invention

A conventional earthquake-resistive design method may include a pseudo-static analysis, or dynamic analysis, wherein the latter may include a response at which an earthquake-resistive matches an external vibration-force. The conventional earthquake-resistive design method may not provide an exact earthquake or seismic force that needs to be balanced with an amount of a resistive force of a horizontal connecting surface arranged between a foundation and a building structure.

As shown by the pictures of the recent earthquake events in Turkey and Taiwan, the collapse of most of the mostly shallow-founded structures was caused in most cases by the yielding of the foundation or the yielding of the resistive of the structural connection of the structure to the foundation. Both are the result of an unsubstantiated earthquake force. Buildings that have collapsed and have not been demonstrated to be stable with the added effect of kinetic forces from the earthquake could have occurred even with compliance with current regulations, because the regulations do not require "primary" proof of the impact of kinetic forces or "mechanical impedance". All previous evidentiary procedures have a secondary character because their approximation to the real state of equilibrium is indirect. In the case of earthquake-resistant various basic building structures, there is a large difference in a dimensioned earthquake force compared to previous calculations, that it is a sufficient cause of global earthquake disasters.

Thus, the conventional earthquake-resistance design method may not provide an exact earthquake resistance of the building structure.

The building structure and the foundation belong to one complete system. Analysis based on dynamic interaction between the structure and the foundation is an important way to obtain reliable data for seismic design and safety evaluation of the building structure.

An object of the present invention is to calculate a seismic force Q of the horizontal connecting surface, considering a mechanical impedance, by applying energy balance equations.

Summary of the Invention

Thus, the present disclosure provides a structure earthquake-resistance design method for calculating a resultant seismic force $Q$ at a horizontal connecting surface and determining a resistive force $R_{Q2}$ at the horizontal connecting surface for designing of a foundation of a building structure and calculating strength of the horizontal connecting surface necessary for preventing the foundation of a building structure from yielding and preventing of loosening of a resistance of a structural connection of the building structure with the foundation. The horizontal connecting surface is a surface connecting the building structure arranged above the foundation of the building structure and the building structure.

The method of the present invention comprises the following steps:

-    defining and obtaining design parameters of the building structure required for calculating a mass $M_1$ of the building structure and calculating mass $M_1$ of the building structure;
-    calculating a response acceleration $a_1$ of the building structure based on a calculation value of earthquake wave acceleration $a_g$ for a certain area and an angle of internal friction $\phi$ in a particular location, and calculating a received inertial force $F_1$ by the building structure at the horizontal connecting surface caused by the seismic wave activity according to following equations

$$M_1 \cdot a_g = M_1 \cdot a_1 \, tg \, \Phi$$

$$a_1 = \frac{a_g}{tg \, \Phi}$$

$$F_1 = a_1 \cdot M_1$$

- defining and obtaining design parameters about a type of the foundation of the building structure 1 and the particular location having the angle of internal friction $\phi$ characteristic and calculating a mass $M_2$ of the foundation, wherein the mass $M_2$ is defined by the establishment of an inertial force $F_2$ of the foundation at the horizontal connecting surface caused by the seismic wave activity;
- calculating an acceleration $a_2$ of the foundation and calculating the inertial force $F_2$, where the inertial force $F_2$ is a function of the inertial force $F_1$ and the acceleration $a_2$ is a function of an angle acceleration $\varepsilon$ of the mass $M_2$ around a center of rotation of the mass $M_2$;
- calculating the seismic force $Q$ of the horizontal connecting surface, on a basis of a mechanical impedance, by applying the following conditions at the horizontal connecting surface according to following equations

$$v = v_1 = v_2$$

$$Z_1 + Z_2 = Z$$

$$F = F_1 + F_2 = Z_1 \cdot v_1 + Z_2 \cdot v_2$$

$$\left[\frac{M_1 \cdot a_1}{v_1} + \frac{M_2 \cdot a_2}{v_2}\right] \cdot v = Z \cdot v = Q$$

$$Q = M_1 \cdot a_1 + M_2 \cdot a_2 = Z \cdot v$$

wherein calculating an acceleration $a_2$ of the foundation and calculating the inertial force $F_2$, the acceleration $a_2$ is a function of the angle acceleration $\varepsilon$ of the mass $M_2$ of the foundation and type of the foundation,

where $v_1$ is a velocity of the first element, $v_2$ is a velocity of the foundation and $v$ is a velocity of the horizontal connecting surface, $Z_1$ is mechanical impedance of the building structure, $Z_2$ is a mechanical impedance of the foundation and $Z$ is a mechanical impedance of the horizontal connecting surface,

wherein $Q$ is the seismic force to which it is necessary to dimension the resistive force $R_{Q2}$ at the horizontal connecting surface for designing of the foundation of a building structure,

wherein the following conditions have to be satisfied:

$$Q[N] < R_{Q2}[N]$$

$$R_{Q2} = R_{CON}(M_2)$$

$$F_1[N] < R_{Q1}[N]$$

$$R_{Q1} = R_{CON}(M_1)$$

where $R_{Q1}$ are resistant forces of the building structure, where a distribution of the inertial force $F_1$ along a height of the building structure 1 is calculated according to the following equations

$$F_i = F_1 \cdot \frac{z_i \cdot M_i}{\sum z_j \cdot M_j} \quad , \quad M_{moment} = \int F_i \, dz$$

where $M_i$ and $M_j$ are floor masses and $z_i$ and $z_j$ are heights of masses $M_i$ and $M_j$ above the horizontal connecting surface.

According to embodiments of the present invention, a foundation structure is selected from a foundation slab structure, foundation with a support structure and a pile foundation structure.

The present invention further provides design parameters of a pile foundation structure.

The present structure earthquake-resistance design method may provide an exact earthquake resistance force of at a horizontal connecting surface necessary for designing of a foundation of a building structure.

Also provided is a computer program comprising program code that, when executed by a processor, enables the processor to carry out a provides a structure earthquake-resistance design method.

Further provided is a record carrier storing a computer program according to the invention.

Thus, using the present structure earthquake-resistance design method, the earthquake-resistance design quality may be evaluated, the constructed building may have a high reliability, and the building structure may be evaluated in terms of earthquake-resistance.

Brief Description of the Drawings

The above and other objects, features and other advantages of the present invention will be explained in more detail below on the basis of three exemplary embodiments taken in conjunction with the accompanying drawings, in which:

Fig. 1 illustrates a cross section through a foundation slab structure according to the invention with above ground building structure arranged thereon,

Fig. 2 illustrates a cross section through a foundation with the support structure according to the invention with above ground building structure arranged thereon, and

Fig. 3 illustrates a cross section through a pile foundation structure according to the invention with above ground building structure arranged thereon.

Detailed description of the Invention

Unless the context requires otherwise, throughout the specification and claims which follow, the word "comprise" and variations thereof, such as, "comprises" and "comprising" are to be construed in an open, inclusive sense, that is, as "including, but not limited to."

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

The implementations, geometrical configurations, materials mentioned and/or dimensions shown in the figures are optional and given for the purposes of exemplification only.

The following detailed description is directed toward a design method for use in calculating a resultant seismic force $Q$ at a horizontal connecting surface 3 for designing of a foundation 2 of a building structure 1 and determining a resistive force $R_{Q2}$ at the horizontal connecting surface 3 for calculating a strength of the horizontal connecting surface 3 necessary for preventing the foundation 2 of a building structure 1 from yielding or/and preventing of loosening of a resistance of a structural connection of the building structure 1 with the foundation 2. The horizontal connecting surface 3 is a surface connecting the building structure 1 arranged above the foundation 2 of the building structure 1 and the building structure 1.

In addition to calculating the strength of the horizontal connecting surface 3, a resistant-earthquake dimensioning of the building structure 1 has to satisfy condition that distribution of inertial forces $F_1$ along a height of the building structure 1 has to be less than resistive forces $R_{Q1}$ of the building structure 1, thus the building structure 1 is designed according to the resistive forces $R_{Q1}$.

In accordance with the present invention, a stability engineering construction is a set of elements or forces [F], which together form a force field [F]. The elements or forces of such force field [F] can be expressed in energy balance equations. If such a statement is made for known characteristic energy points or field surfaces, then it possible to obtain a solution of such equations.

Known energy points or surfaces are simply those that have a known one of characteristic values, such as displacement, velocity or acceleration "u, v, a" where said values are always in a functional relationship.

If elements of the force field [F] receive kinetic energy, such as an earthquake, then a kinetic energy force acquires kinetical character. Since this is a kinetic energy force, in this case the question arises of a nature of the interaction of these forces in the force field [F].

If the velocities of the field elements are different, then the expression of the interaction of these forces is no longer possible on the basis of the stiffness of the elements calculated as follows

$$F = K \cdot \delta \ [N], \quad K = \frac{F}{\delta} \ [N/m]$$

but based on a mechanical impedance of the elements calculated as follows

$$F = Z \cdot v \ [N] \quad , \quad Z = \frac{F}{v} \ [Ns/m]$$

where $Z$ represents the mechanical impedance [N s/m], not the stiffness [N/m].

The mechanical impedance $Z$ is a measure of how much a structure resists motion when subjected to a kinetic force. It relates forces with velocities acting on a mechanical system.

An earthquake is an earth seismic wave, which consists of a cyclic exchange of potential and kinetic energy of particles of a wave material, particle mass flow $q$ [kg/s], particle velocity $v$ [m/s] and acceleration $a_g$ [m/s$^2$].

This change propagates in the form of a wave, longitudinally or transversely at constant velocity $C$ [m/s] according to the well-known law of elasticity, see S. Timoshenko & J.N. Goodier "Theory of Elasticity, Second edition ", 1951. [IX]:

$$\frac{d^2 u_n}{dt^2} = \frac{C_n^2 \cdot d^2 u_n}{dx^2}, \qquad C_n = \left[\frac{E}{\rho}\right]^{\frac{1}{2}}$$

$$\frac{d^2 u_t}{dt^2} = \frac{C_t^2 \cdot d^2 u_t}{dx^2}, \qquad C_t = \left[\frac{G}{\rho}\right]^{\frac{1}{2}}$$

The inertial force $F_1$ of a building structure 1, which corresponds to the acceleration of the seismic wave $a_g$, is located in the space of the wave and is transferred to the building structure 1 as a further acting active force of the building structure 1. At the same time, the inertial force $F_2$ is created in a wave field, thus creating impedance conditions of the two elements, a first element 1 and second element 2.

In the field of forces, there are the following elements of a stability construction:

- **Object 1 - a first element 1 of the field** being the building structure 1 - an element with a mass $M_1$, received force $F_1$ from the seismic wave, acceleration $a_1$, velocity $v_1$ and displacement $u_1$
  $F_1, a_1, v_1, u_1$
- **Horizontal connecting surface 3 - common element of the field** being an element with resultant confrontation force $Q$ or a resultant seismic force,
- **Transmission medium or object 2 or a second element 2 of the field** - an element with a mass $M_2$, transferred force $F_2$ from the first element 1, acceleration $a_2$, velocity $v_2$ and displacement $u_2$
  $F_2, a_2, v_2, u_2$

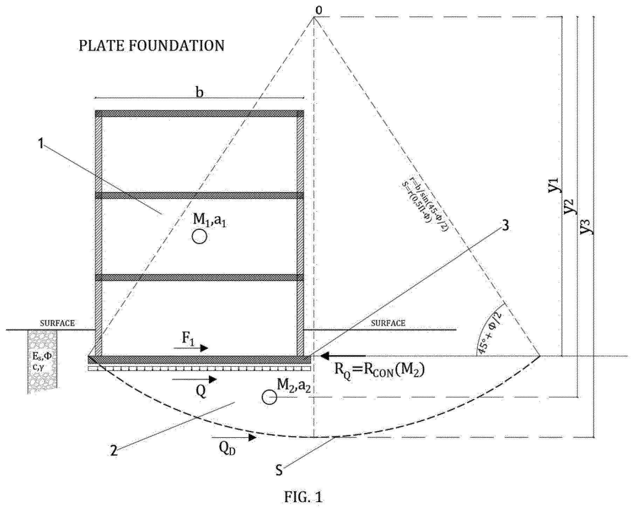

In accordance with the present invention and as illustrated in the figures 1 to 3, the first element 1 of the field relates to the building structure 1 arranged above a foundation 2, ground 2, surrounding ground 2, or combination thereof. In the present application terms "first element 1" and "building structure 1" are interchangeably used and relate to the same element of the field. The second element 2 of the field relates to the ground 2 arranged below the first element 1, the foundation 2 arranged below the first element 1, or a combination thereof. In the in the present application terms "second element 2", "ground 2" and "foundation 2" are interchangeably used and relate to the same element of the field. The horizontal connecting surface 3 is a surface arranged between the first 1 and second element 2, connecting the first 1 and second element 2 of the field. Referring to the figures 1 to 3, the connecting surface 3 is a surface connecting the building structure 1 and the foundation 2 of the building structure 1.

In accordance with the balance of forces on a basis of known characteristic energy points or surfaces, a resultant seismic force $Q$ is known, since the following can be applied.

In a state of equilibrium, two bodies with different velocities cannot stand in the same place at the same time, the velocities on the horizontal connecting surface of these two bodies must be **"forcibly"** unified, otherwise destruction or breakdown will occur.

To prevent destruction or breakdown of the building structure 1, the following condition at the horizontal connecting surface 3 must be satisfied:

$$v = v_1 = v_2 \qquad [1]$$

where $v$ is velocity of the horizontal connecting surface 3, $v_1$ is velocity of the first element 1 of the field and $v_2$ is velocity of the second element 2 of the field.

A shear stress $\sigma_s$ on a layer, will turn any straight line originally perpendicular to the layer through an angle $\gamma$, the angle $\gamma$ is a relative shear. Upon elastic deformations, the angle $\gamma$ is very small, and tg $(\gamma) \approx \gamma$, consequently the relative shear is equal to an angle of shear $\gamma$, so that

$$\sigma_s = G_S \, tg \, \gamma$$

The coefficient $Gs$ depends only on the properties of a material is the shear modulus which equals such a tangential stress at which the angle of shear will be 45° (tg $(\gamma)$ =1), if an elastic limit was not exceeded at such large deformations. The shear modulus Gs is measured in pascals [Pa].

A force $F_n$ on a layer in a ground will generate a shear force $F_s$, so that

$$F_s = F_n \, tg \, \phi$$

where an angle of internal friction "$\phi$" depends only on properties of the ground.

The transition of the acceleration of the seismic wave force into the building structure 1 through the horizontal connecting surface 3 of two elements of different dominant material constants $M_2 (\phi)$ i $M_1 (G_S)$, where there is an initial wave interaction of transmission medium being the second element 2 with defined mass $M_2$ with the building structure 1 being the first element 1 with defined mass $M_1$, may be demonstrated as follows

seismic wave $M_2$, $a_g \rightarrow$ horizontal connecting surface/plate $\rightarrow$ element $M_1$, $a_1$

$$M_1 \cdot a_g = M_1 \cdot a_1 \, tg \, \Phi$$
$$a_1 = \frac{a_g}{tg \, \Phi} \qquad [2]$$
$$F_1 = a_1 \cdot M_1$$

The question arises as to what is the resultant force $Q$ in the confrontation with seismic action and how to find the parameters necessary for the calculation of the resultant force $Q$.

We know with which parameter values the event "occurred", but we do not know with which parameter values in the future the event "will occur". It remains to apply one computationally possible parameter with a value of which we can unambiguously express the balance and at the same time satisfy an impedance condition.

The value with which it can be unambiguously expressed the balance and at the same time to satisfy the mechanical impedance condition is calculated value of an acceleration of the seismic wave $a_g$ for a certain area. The acceleration of the seismic wave $a_g$ is expressed from the spectrum of the acceleration with respect to time of the seismic wave, the possibility of which appears in some period of time in the life time of the building structure 1. It is based on the actual accelerogram, a strong-motion record or acceleration time-history. Accelerographs record the acceleration of the ground with respect to time. From this record strong-motion intensity measures (IMs, also called parameters) can be computed in a particular area.

The resultant force $Q$ appears on the horizontal connecting surface 3, as a factor of velocity merging, which is balanced with the second element 2 having the mass $M_2$. When this force becomes greater than the strength of the horizontal connecting surface 3 can withstand in the equilibrium state, then the building structure breaks down, therefore the structural second element 2 is proved to the limit state of a highest expected resultant force $Q$, and the first element 1 having the mass $M_1$ to the limit state of the force $F_1$.

If we start from the fact that the impedance $Z$ of two elements with different velocities but with a common horizontal connecting surface occurs, then it is clear that a force on the horizontal connecting surface 3 or in this case the seismic resultant force $Q$ can be calculated.

According to the definition of the mechanical impedance:

$$F_s = F_1 + F_2 = Z_1 \cdot v_1 + Z_2 \cdot v_2$$
$$v = v_1 = v_2$$
$$\left[\frac{M_1 \cdot a_1}{v_1} + \frac{M_2 \cdot a_2}{v_2}\right] \cdot v = Z \cdot v = Q \qquad [3]$$
$$Z_1 + Z_2 = Z$$
$$Q = M_1 \cdot a_1 + M_2 \cdot a_2 = Z \cdot v$$

where $Q$ is the "earthquake or seismic resultant force" that needs to be balanced with an amount of a resistive force $R_{Q2}$ at the horizontal connecting surface 3 of the second element 2, namely the foundation 2, ground 2 or combination thereof having the mass $M_2$, and the inertial force $F_1$ as a resistive inertial force with the first element 1, namely building structure 1 having the mass $M_1$.

If the transmission medium i.e. the second element 2 with defined mass $M_2$, which defines its mass for transmitting the seismic force mainly on the basis of the shear modulus "$G_S$", as in the case of a foundation made of concrete or steel, then the mass $M_2$ is determined by geometric dimensions of the second element 2, namely foundations 2. In the case when the transmission medium i.e. the second element 2 with defined mass $M_2$ is the ground 2 with the dominant characteristic being the angle of internal friction $\phi$, as in the case of a slab foundation, then the mass $M_2$ of the second element 2 is determined with the mass discontinuity limit line that forms the inertial force $F_2$.

Distribution of shear inertial forces $F_i$ along the height of the building structure 1 may be calculated as follows (see reference [XI])

$$F_i = F_1 \cdot \frac{z_i \cdot M_i}{\sum z_J \cdot M_J} \qquad M_{moment} = \int F_i \, dz$$

where $M_i \, (M_j)$ are floor masses and $z_i \, (z_j)$ are heights of the masses above the connecting surface 3.

Distribution of force $Q$ by possible resistive forces $R_{Q2}$ of foundation structures must be as follows

$$Q[N] < R_{Q2}[N]$$
$$R_{Q2} = R_{CON}(M_2) \qquad [4]$$

wherein $R_{CON}$ is a resistive force of the horizontal connecting surface 3.

Further, the resistant-earthquake dimensioning of the building structure 1 has to satisfy condition that distribution of inertial forces $F_1$ along a height of the build sing structure 1 has to be less than resistive forces $R_{Q1}$ of the building structure 1.

Figure 1 illustrates a cross section through a foundation slab structure according to the invention with structures arranged thereon.

The mass $M_1$ is the mass of the first element 1 i.e. building structure 1 arranged above the foundation 2, ground 2, or combination thereof. The mass $M_1$ is calculated according to well-known principles.

The mass $M_2$ of the second element 2 is defined by the establishment of the inertial force $F_2$. In the case of the foundation slab structure 2, the transmission medium is the ground 2, i.e. the second element 2, with a dominant characteristic being the angle of internal friction $\phi$, therefore the second element 2 is determined with a border of a mass discontinuity $M_2$. For the foundation slab structure 2 the mass $M_2$ is calculated by determining a border of a discontinuity of the mass $M_2$, wherein the discontinuity of the mass $M_2$ is determined by a circular segment defined with a circle $S$ having a center of rotation $0$ of the mass $M_2$. The mass discontinuity occurs on a line of equalization of the angle of internal friction $\phi$ and the angle of the direction of the resultant stress. Since it is a rotational movement, the border of the mass discontinuity is a circle defined by two known tangents. The first tangent is arranged at a starting point where an angle between the horizontal connecting surface 3 and of a sliding surface is $45\text{-}\phi/2$, the starting point is arranged at a edge of the foundation slab structure 2 where the inertial force $F_1$ acts on the mass $M_2$, and the second tangent is arranged at a bisector of the circular segment where the tangent must be horizontal, where a radius $r$ of the center of rotation $0$ equals b/sin($45\text{-}\phi/2$) where $b$ is a width of the building structure 1. The second tangent is at the bisector of the circular segment where the tangent must be horizontal. The acceleration $a_2$ of the foundation slab structure 2, is a function of the inertial force $F_1$ and the angle acceleration $\varepsilon$ of the mass $M_2$ with the radius of rotation r=b/sin($45\text{-}\phi/2$). The acceleration $a_2$ of the foundation slab structure 2 and the inertial force $F_2$ may be calculated, and the mass $M_2$ with the angular acceleration $\varepsilon$, and the horizontal acceleration $a_2$ is determined and the seismic resultant force $Q$ for the foundation slab structure may be calculated as follows

$$\varepsilon = \frac{M_0}{I_2} = \frac{a_2}{y_2}$$
$$M_0 = F_1 \cdot y_1 + Q_d \cdot y_3$$
$$I_2 = M_2 \cdot y_2^2$$
$$F_1 = M_1 \cdot a_1, \qquad F_2 = M_2 \cdot a_2$$
$$Q_d = F_1 - F_2$$
$$\frac{F_1 \cdot y_1 + (F_1 - M_2 \cdot a_2) \cdot y_3}{M_2 \cdot y_2^2} = \frac{a_2}{y_2}$$
$$a_2 = \frac{F_1 \cdot (y_1 + y_3)}{M_2 \cdot (y_2 + y_3)}$$
$$Q = M_1 \cdot a_1 + M_2 \cdot a_2$$

[5]

where $y_1$ is a distance between the center of rotation $0$ and the horizontal surface 3, $y_2$ is a distance between the center of rotation $0$ and a center of the mass $M_2$, $y_3$ is a distance between the center of rotation $0$ and a horizontal tangent of sliding surface, $y_3$ equals radius $r$ of the center of rotation $0$. $Q_d$ is a resultant shear force at the sliding surface defined by circle $S$, $M_0$ is an angular momentum, $\varepsilon$ is the angular acceleration and $I_2$ is a moment of inertia of $M_2$.

$Q$ represents the seismic resultant force calculated for the foundation slab structure to which it is necessary to dimension resistance characteristics $R_{Q2}$ of the horizontal connecting surface 3, where the following condition at the horizontal connecting surface 3 must be satisfied

$$Q[N] < R_{Q2}[N]$$

$$R_{Q2} = R_{CON}(M_2)$$

$R_{Q2} = R_{CON}(M_2)$ is the resistive force of the horizontal connecting surface 3 and in the foundation slab structure may be calculated as follows:

$$R_{Q2} = R_{CON}(M_2) = M_1 \cdot g \cdot (tg\,\Phi + c)$$

with added passive resistance where $R_{CON}$ may be calculated as follows

[6]

$$R_{Q2} = R_{CON}(M_2) = M_1 \cdot g \cdot (tg\,\Phi + c) + R_{PAS}$$

where $R_{PAS}$ is gravitational resistive force of the passive resistance. Said $R_{PAS}$ is resistive force existing in a case when the first element 1, i.e. above ground object comprises underground structures such as garages or/and basements, said underground structure generates gravitational resistive force $R_{PAS}$.

$R_{Q2} = R_{CON}(M_2)$ in the foundation slab structure may be reinforced with adding a Retaining Engineering Structure - RES where $R_{Q2}$, $R_{CON}(M_2)$ may be calculated as follows

$$R_{Q2} = R_{CON}(M_2) = M_1 \cdot g \cdot (tg\,\Phi + c) + R_{RES}$$

where $R_{RES}$ is a resistive force generated by a Retaining Engineering Structure.

The Retaining Engineering Structure is described in European patent application no. 18 759 997.2 which application is incorporated herein in its entirety by reference.

According to the present invention, the Retaining Engineering Structure is implemented for the building structure 1 without underground structures, and in addition to the foundation slab structure 2.

Thus, the resistive force $R_{RES}$ is present when in addition to the foundation slab structure 2 the building structure 1 comprises the retaining engineering structure, wherein the retaining engineering structure is implemented for the building structure 1 without underground structures.

The resistance force $R_{RES}$ is calculated for a retaining engineering structure comprising a vertical building structure and a plurality of tensile batter piles disposed inclining downwardly towards backfill, the vertical building structure and each of the plurality of tensile batter piles are mutually coupled by a coupling means and mutually arranged at an angle $\beta$, the angle $\beta$ is the angle between each of the plurality of tensile batter piles and the vertical building structure at the point of their coupling by said means to the vertical building structure.

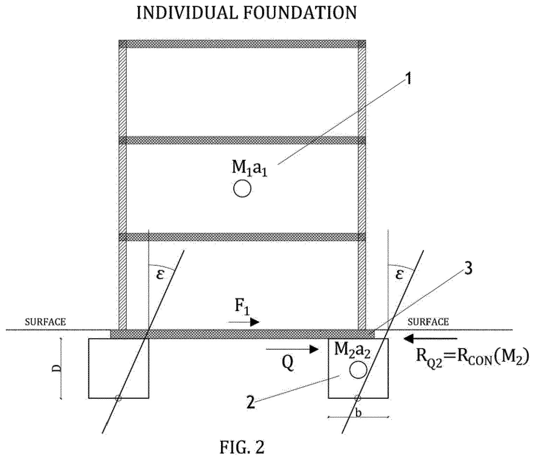

Fig. 2 illustrates a cross section through the foundation with the support structure according to the invention with above ground building structure arranged thereon.

The transmission medium, i.e. the second element 2 is the foundation with the support structure 2, which defines its mass for the transmission of the force of the seismic wave dominantly on the basis of solid cohesion of the material, such as concrete. The mass $M_2$ is determined by geometric dimensions of the foundation with the support structure 2. When force $F_1$ acts on the first element 1, the mass $M_2$ of the second element 2 gets angular acceleration $\varepsilon$ and acceleration $a_2$. The acceleration $a_2$ of the foundation with the support structure 2 is a function of the inertial force $F_1$ and the angle acceleration $\varepsilon$ of the mass $M_2$ around the center of rotation $0$ of the foundation with the support structure 2. The center of rotation $0$ is located at in a middle of a bottom surface of the foundation with the support structure 2, the acceleration $a_2$ of the foundation with the support structure 2 and the inertial forces $F_1$ and $F_2$ is calculated according the following equations:

$$F_1 = M_1 \cdot a_1 \qquad F_2 = a_2 \cdot M_2$$
$$\varepsilon = \frac{M_0}{I_2} = \frac{2 \cdot a_2}{D}$$
$$a_2 = \frac{M_0 \cdot D}{2 \cdot I_2}, \qquad M_0 = F_1 \cdot D, \qquad I_2 = \frac{M_2 \cdot D^2}{4} \quad , \quad a_2 = \frac{2 \cdot F_1}{M_2} \qquad [7]$$
$$F_2 = a_2 \cdot M_2$$
$$Q = M_1 \cdot a_1 + M_2 \cdot a_2$$

where $D$ is a height of the foundation with the support structure 2, $b$ is a width of the foundations with the support structure 2, $Q$ is seismic resultant force calculated for the foundation with the support structure 2 to which it is necessary to dimension resistance characteristics $R_{Q2}$ of the horizontal connecting surface 3, where the following condition at the horizontal connecting surface 3 must be satisfied

$$Q[N] < R_{Q2}[N]$$
$$R_{Q2} = R_{CON}(M_2) \qquad\qquad [8]$$

where $R_{Q2} = R_{CON}(M_2)$ is the resistive force of the horizontal connecting surface 3 according to the embodiment of the foundation with the support structure 2.

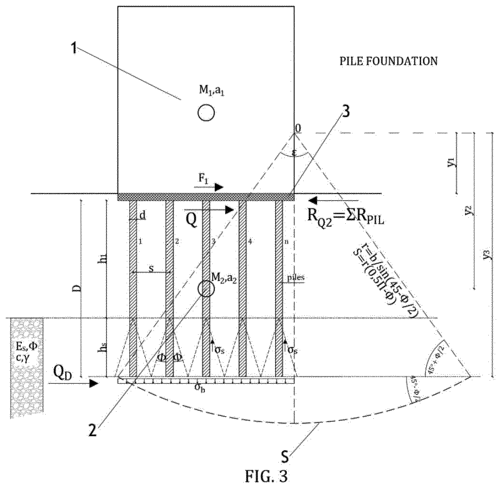

Fig. 3 illustrates a cross section through a pile foundation structure according to the invention with above ground building structure arranged thereon.

Piles are vertical or nearly vertical columns built with the purpose of transfer the load of the building into deeper, better-bearing soil layers. To avoid difficult-to-control soil settlements, due to the resistive action of a group of piles it is necessary to use pile foundations. With reference to figure 3, the building structure 1 arranged above the connecting surface 3 is the first element 1 with defined mass $M_1$, the group of piles 2 arranged below the connecting surface 3 is the second element 2 with defined mass $M_2$, where an outer perimeter of the group of piles 2 structure determines the mass $M_2$.

Piles in the constructive group are determined with $s \times s$, $D$, $d$, $h_s=D/3$, and with pilot-ground sliding surface

$$\varphi = \left(45° + \frac{\Phi}{2}\right) - \left(45° - \frac{\Phi}{2}\right) = \Phi$$

where                                        where s is distance between piles, $D$ is embedment depth of piles, $d$ is diameter of piles and, where deformation - tension force $\delta$- $N_P$ for one pile may be calculated as follows (see *reference [III]*)

$$\delta = \frac{3 \cdot N_P \cdot ln\frac{s}{d}}{2 \cdot h_s \cdot \pi \cdot E_s}$$

$N_P$[N] a tension force in one pile may be calculated as follows

9

$$N_P = \int \frac{\sigma_s \cdot d^2 \cdot \pi}{2} dh_s \qquad [9]$$

Equilibrium equations on a surface where y=D may be calculated as follows

$$W_{work}(h_s) = U_{pot}(base)$$

$$\Delta = \Delta_{hs} + \Delta_b$$

$$\Delta_{hs} = \frac{3 \cdot N_p \ln \frac{s}{d}}{2 \cdot \pi \cdot h_s \cdot E_s}, \qquad \Delta_b = \frac{e_b \cdot h_b}{2}$$

$$\frac{3 \cdot N_P^2 \cdot \ln \frac{s}{d}}{4 \cdot \pi \cdot h_s \cdot E_s} = \frac{\sigma_b \cdot e_b \cdot s^2 \cdot h_b}{4}$$

$$h_b = \frac{3 \cdot N_P^2 \cdot \ln \frac{s}{d}}{\pi \cdot h_s \cdot E_s \cdot \sigma_b \cdot e_b \cdot s^2}$$

$$\Delta_b = \frac{3 \cdot N_P^2 \cdot \ln \frac{s}{d}}{2 \cdot \pi \cdot h_s \cdot E_s \cdot \sigma_b \cdot s^2}$$

$$\Delta = \frac{(1 + \frac{N_P}{\sigma_b \cdot s^2}) \cdot 3 \cdot N_P \cdot \ln \frac{s}{d}}{2 \cdot \pi \cdot h_s \cdot E_s}$$

[10]

where $\Delta$ is deformation of the group of piles 2, $\Delta_{hs}$ is deformation of the group of piles 2 at along a depth $h_s$ and $\Delta_b$ is deformation of the group of piles 2 at its base, where the base of the group of piles 2 is arranged at a bottom of the group of piles 2 at the embedment depth of piles **D**. Further, $e_b$ is specific deformation of a base of piles 2 at the bottom of the group of piles 2, $E_s$ is elasticity modulus of pile elements along length $h_s$, where $h_s$ is anchoring length of the piles, and $\sigma_b$ is stress at the base of the group of piles 2.

Vertical stability of the group of piles 2 may be calculated as follows

$$\Delta < \Delta_{admisible}$$

$$\sigma_b < q_R$$

$$\sigma_b = p + \gamma \cdot D$$

$$q_R = c \cdot N_c + q \cdot N_q + \frac{1}{2} \cdot \gamma \cdot B \cdot N_\gamma$$

$$\sigma_s = \frac{N_p}{d \cdot \pi \cdot h_s}, \qquad \sigma_{su} = \sigma_b \cdot \tan \Phi + c$$

$$s = 2 \cdot h_s \cdot \tan \Phi$$

$$h_s = \frac{N_p}{d \cdot \pi \cdot \sigma_s \cdot \tan \Phi}$$

$$3 \cdot h_s < D$$

$$N_{PU} = h_s \cdot d \cdot \pi \cdot \sigma_{su} \cdot \tan \Phi$$

$$N_P < N_{PU}$$

[11]

where $N_{PU}$ is ultimate tension force in each pile.

When the transmission medium is a pile structure as a foundation 2, then the outer perimeter of the pile structure determines the mass of the transmission medium being the second element 2.

If the pile is designed as a complete transmitter of the horizontal load, then $tg \Phi = 1$, in the seismic case of the force field [F] we have, [$M_2$ (piling), $M_1$ (Gs) and $Q$].

The transition of the acceleration of the wave force into the object through the connecting surface 3 of the two elements 1 and 2, there is an initial wave confrontation that may be calculated as follows

$$M_1 \cdot a_g = M_1 \cdot a_1 \, tg \, \Phi$$

$$a_1 = \frac{a_g}{tg \, \Phi}$$

If the pile is designed as complete transmitter of the horizontal load, then $tg \, \Phi = 1$

$$F_1 = M_1 \cdot a_g$$

For the pile foundation structure 2, the acceleration $a_2$ of pile foundation structure 2 is a function of the inertial force $F_1$ and an angle acceleration $\varepsilon$ of the mass $M_2$ around the center of rotation $0$ of the sliding surface with the radius of rotation r=b/sin(45-$\phi$/2), the acceleration $a_2$ of the pile foundation structure 2 and the inertial force $F_2$ is calculated according the following equations

$$\varepsilon = \frac{M_0}{I_2} = \frac{a_2}{y_2}$$
$$M_0 = F_1 \cdot y_1 + Q_d \cdot y_3$$
$$I_2 = M_2 \cdot y_2^2$$
$$F_1 = M_1 \cdot a_1, \qquad F_2 = M_2 \cdot a_2, \qquad Q_d = F_1 - F_2$$
$$\frac{F_1 \cdot y_1 + (F_1 - M_2 \cdot a_2) \cdot y_3}{M_2 \cdot y_2^2} = \frac{a_2}{y_2}$$
$$a_2 = \frac{F_1 \cdot (y_1 + y_3)}{M_2 \cdot (y_2 + y_3)}$$
$$Q = M_1 \cdot a_1 + M_2 \cdot a_2$$

[12]

where $y_1$ is a distance between the center of rotation $0$ and the horizontal surface 3, $y_2$ is a distance between the center of rotation $0$ and a center of the mass $M_2$, $y_3$ is a distance between the center of rotation $0$ and a total depth of the pile foundation 2, i.e. a bottom of the piles.

For the pile foundation structure 2 the center of rotation $0$ of the mass $M_2$ is determined by the circular segment defined with the circle $S$, the circular segment is defined with two tangents, the first tangent is arranged at the starting point where the angle between horizontal surface of the bottom of the group of piles 2 and of the sliding surface is $45-\phi/2$, the starting point is arranged at a bottom edge of the group of piles 2, and the second tangent is arranged at the bisector of the circular segment where the tangent must be horizontal, where the radius $r$ of the center of rotation $0$ equals b/sin($45-\phi/2$) and $b$ is the width of the pile foundation structure 2.

The mass $M_2$, is calculated by determining a volume forming an outer circumference formed by the pilot structure pile foundation structure 2.

$Q$ represents the seismic resultant force calculated for the pile foundation structure to which it is necessary to dimension resistance characteristics $R_{Q2}$ of the horizontal connecting surface 3, where the following condition at the horizontal connecting surface 3 must be satisfied

$$Q[N] < R_{Q2}[N]$$
$$R_{Q2} = R_{CON}(M_2) = \sum R_{PIL}$$

[13]

where $R_{Q2} = R_{CON}(M_2)$ is the resistive force of the horizontal connecting surface 3 where $\Sigma R_{PIL}$ is sum of the horizontal resistive forces in the pile foundation structure 2.

Any question of balance in nature has a final answer only after demonstration of an energy balance. With the help of energy balance equations with a stability and anti-earthquake constructions, proof stability solutions are arrived at, which reveal the primary nature of the state of balance. Previous calculations of stability proofs did not take into account energy balance equations.

Foundation on insufficient load-bearing soil was solved in ancient times with the construction of the collective name "piling", which implies collective action or resistance. Thomas Whitaker (1976) said, "Piling is a form of construction of great antiquity, and an almost instinctive trust in piles for overcoming difficulties runs throughout foundation work".

To date, "piling" has no better expedient alternative, and it is "not even necessary", because it is also the best anti-seismic construction. This building structure has not been shown with a primary structural approach so far.

In most cases, it is unnecessary and irrational, and in the case of earthquakes, harmful, as a substitute for "piling", to search for a deep bearing layer using "piers or caissons", unless there is liquefaction.

Due to this reality, the following has been proven. In the case of earthquake-resistant various basic building structures, there is such a large difference in the dimensioned earthquake force compared to previous calculations, that it is a sufficient cause of global earthquake disasters.

In the case of basic peeling constructions, the basic constructional advantages have not been proven so far, which is why these constructions have been performed since ancient times. These constructional advantages are characteristics of the load capacity, which are shown in their real sizes with this approach.

Numerous characteristics and advantages of the invention have been set forth in the foregoing description, together with details of the structure and function of the invention, and the novel features thereof are pointed out in the appended claims. The disclosure, however, is illustrative only and changes may be made in detail, especially in matters of shape, size and arrangement of parts, within the principal of the invention, to the full extent indicated by the broad general meaning of the terms in which the appended claims are expressed.

Also provided is a computer program enabling a processor to carry out the method according to the invention and as specified above.

Further provided is a record carrier storing a computer program according to the invention may be provided, for example a CD-ROM, a DVD, a memory card, a diskette, internet memory device, a central computer or remotely in a computer cloud, or a similar data carrier suitable to store the computer program for optical or electronic access.

**Notation:**

**RES** - Retaining Engineering Structure
**R**[N] - resistive force
$\mathbf{R_{RES}}$ [N] - resistive force of the Retaining Engineering Structure
$\mathbf{R_{CON}}$[N] - resistive force of the horizontal connecting surface
$\mathbf{R_{PAS}}$[N] - gravitational resistive force
**u** [m], **v** [m/s], **a** [m/s$^2$], **g**[m/s$^2$]-displacement, velocity, acceleration, gravitational acceleration
**M** [kg] = **W/ g** = V**r**[kg] - mass of an element of the field
**W**[N]= **g M** = V**r g** [N] - gravitational force
**F= a M** [N], N [kg m/s$^2$], **F= q** $\times$ **v** [N] - inertial force
$\mathit{a_g}$ - calculation value of earthquake wave acceleration
$\varepsilon$ [1/s$^2$] - angular acceleration - rotational motion
$\mathbf{N_P}$[N], - tension axial force of the pile
$\mathit{Q}$=Z v [N] - shear force/ seismic resultant force
$\mathit{Z}$=**F/ v** [N s/m] - impedance of elements
$\triangle$ - deformation of the structure
δ- deformation of elements of the structure
**K=F/**δ[N/m] - stiffness of the element
ρ [kg /m$^3$], **q**[kg/s], γ=ρ **g** [kN/m$^3$] - density, mass flow rate and specific weight
$\mathit{C_n}$ =[E/ r]$^{1/2}$ [m/s] - wave velocity of a longitudinal wave
$\mathit{C_t}$ =[G/ r]$^{1/2}$ [m/s] - wave velocity of a transverse wave
$\mathbf{W_{work}}$, $\mathbf{U_{pot}}$, $\mathbf{K_{kin}}$, [J], J [kg m$^2$/s$^2$] - work and energy
$\mathbf{E_s}$ =σ/**e** [ kN/m$^2$] - modulus of elasticity of the element
**e=** $\delta$ /**L** [m/m] - specific deformation
**Gs =E/2(1+**μ**)** [ kN/m$^2$] shear modulus
μ - Poisson's number
σ$_s$ σ$_n$, [σ$_{su}$ σ$_{nu}$] --- [kN/m$^2$] - stresses, shear and normal, [ultimate]
$\mathbf{I_{sec}}$[m$^4$], $\mathbf{I_{rot}}$[kg m$^2$] - cross section and rotation characteristics
φ, **c** [kN/m$^2$], γ$_{uns}$, γ$_{sat}$ [kN/m$^3$] - angle of internal friction, cohesion and soil/ground weight

**References:**

[I] Biot, M. A. Proc.Natl.Acad. Sci.1933

[II] Bowles, J.E. "Foundations Analysis and Design, Fifth Edition ", 1996.

[III] Cooke, R. W. The settlement of friction pile foundations 1974

[IV] Poulos, H.G. & Davis, E.H.: Pile Foundation Analysis and Design 1980.

[V] Terzaghi, K. & Peck, R. B. "Soil Mechanic in Engineering Practice ", 1967.

[VI] S.P.Timoshenko &, D.H. Young "Theory of Structures, Second Edition", 1965.

[VII] Timoshenko, P. S. "Strength of Materials, Third Edition ", 1958.

[VIII] S. Timoshenko & D.H. Young "Advanced Dynamics, Fourth Edition ", 1948.

[IX] S. Timoshenko & J.N. Goodier "Theory of Elasticity, Second edition ", 1951.

[X] Whitaker, T. "The Design of Piled Foundations, Second edition ", 1976.

[XI] EUROCODE 8 "Design of structures for earthquake resistance"

**Claims**

1. A structure earthquake-resistance design method for calculating a resultant seismic force $Q$ at a horizontal connecting surface (3) and determining a resistive force $R_{Q2}$ at the horizontal connecting surface (3) for designing of a foundation of a building structure and calculating strength of the horizontal connecting surface (3) necessary for preventing a foundation (2) of a building structure (1) from yielding or preventing of loosening of a resistance of a structural connection of the building structure (1) with the foundation (2), the horizontal connecting surface (3) is a surface connecting the building structure (1) arranged above the foundation (2) of the building structure (1) and the building structure (1), the method comprising the following steps:

   - defining and obtaining design parameters of the building structure (1) required for calculating a mass $M_1$ of the building structure (1) and calculating mass $M_1$ of the building structure (1);
   - calculating a response acceleration $a_1$ of the building structure (1) based on a calculation value of earthquake wave acceleration $a_g$ for a certain area and an angle of internal friction $\phi$ in a particular location, and calculating a received inertial force $F_1$ by the building structure (1) at the horizontal connecting surface (3) caused by the seismic wave activity according to following equations

$$M_1 \cdot a_g = M_1 \cdot a_1 \, tg \, \Phi$$

$$a_1 = \frac{a_g}{tg \, \Phi}$$

$$F_1 = a_1 \cdot M_1$$

   - defining and obtaining design parameters about a type of the foundation (2) of the building structure (1) and the particular location having the angle of internal friction $\phi$ characteristic and calculating a mass $M_2$ of the foundation (2), wherein the mass $M_2$ is defined by the establishment of an inertial force $F_2$ of the foundation (2) at the horizontal connecting surface (3) caused by the seismic wave activity;
   - calculating an acceleration $a_2$ of the foundation (2) and calculating the inertial force $F_2$, where the inertial force $F_2$ is a function of the inertial force $F_1$ and the acceleration $a_2$ is a function of an angle acceleration $\varepsilon$ of the mass $M_2$ around a center of rotation of the mass $M_2$;
   - calculating the seismic force $Q$ of the horizontal connecting surface (3), on a basis of a mechanical impedance, by applying the following conditions at the horizontal connecting surface (3) and following equations

$$v = v_1 = v_2$$

$$Z_1 + Z_2 = Z$$

$$F = F_1 + F_2 = Z_1 \cdot v_1 + Z_2 \cdot v_2$$

$$\left[ \frac{M_1 \cdot a_1}{v_1} + \frac{M_2 \cdot a_2}{v_2} \right] \cdot v = Z \cdot v = Q$$

$$Q = M_1 \cdot a_1 + M_2 \cdot a_2 = Z \cdot v$$

wherein calculating an acceleration $a_2$ of the foundation (2) and calculating the inertial force $F_2$, the acceleration $a_2$ is a function of the angle acceleration $\varepsilon$ of the mass $M_2$ of the foundation (2), type of the foundation (2), where $v_1$ is a velocity of the first element (1), $v_2$ is a velocity of the foundation (2) and $v$ is a velocity of the horizontal connecting surface (3), $Z_1$ is mechanical impedance of the building structure (1), $Z_2$ is a mechanical impedance of the foundation (2) and $Z$ is a mechanical impedance of the horizontal connecting surface (3),

wherein $Q$ represents the seismic force to which it is necessary to dimension the resistive force $R_{Q2}$ at the horizontal connecting surface (3),

wherein the following conditions have to be satisfied:

$$Q[N] < R_{Q2}[N]$$

$$R_{Q2} = R_{CON}(M_2)$$

$$F_1[N] < R_{Q1}[N]$$

$$R_{Q1} = R_{CON}(M_1)$$

where $R_{Q1}$ are resistant forces of the building structure (1) defined for a resistant-earthquake dimensioning of the building structure (1), $R_{CON}(M_2)$ are resistance forces of the foundation (2), $R_{CON}(M_1)$ are resistance forces of the building structure (1), where a distribution of the inertial force $F_1$ along a height of the building structure (1) is calculated according to the following equations

$$F_i = F_1 \cdot \frac{z_i \cdot M_i}{\sum z_j \cdot M_j} \quad , \qquad M_{moment} = \int F_i \, dz$$

where $M_i$ and $M_j$ are floor masses and $z_i$ and $z_j$ are heights of masses $M_i$ and $M_j$ above the horizontal connecting surface (3).

2. The method according to claim 1, wherein the type of the foundation (2) is selected from a foundation slab structure (2), foundation with support structure (2) and a pile foundation structure (2).

3. The method according to claims 1 and 2, wherein for the foundation with the support structure (2) or the pile foundation structure (2), the mass $M_2$ is calculated according to design parameters and dimensions of the foundation (2).

4. The method according to claims 1 and 2, wherein for the foundation slab structure (2) the mass $M_2$ is calculated by determining a border of a discontinuity of the mass $M_2$, the discontinuity of the mass $M_2$ occurs on a line of equalization of the angle of internal friction $\phi$ and an angle of the direction of the resultant stress, wherein the discontinuity of the mass $M_2$ is determined by a circular segment defined with a circle $S$ having a center of rotation $0$ of the mass $M_2$, the circular segment is defined with two tangents, the first tangent is arranged at a starting point where an angle between the horizontal connecting surface (3) and of a sliding surface is $45-\phi/2$, the starting point is arranged at a edge of the foundation slab structure (2) where the inertial force $F_1$ acts on the mass $M_2$, and the second tangent is arranged at a bisector of the circular segment where the tangent must be horizontal, where a radius $r$ of the center of rotation $0$ equals b/sin($45$-$\phi$/2)where $b$ is a width of the building structure (1).

5. The method according to claim 4, wherein for the foundation slab structure (2), the acceleration $a_2$ of the foundation (2), is a function of the inertial force $F_1$ and the angle acceleration $\varepsilon$ of the mass $M_2$ around the center of rotation $0$ of the mass $M_2$ with the radius of rotation r=b/sin($45$-$\phi$/2), the acceleration $a_2$ of the foundation slab structure (2) and the inertial force $F_2$ is calculated according the following equations

$$a_2 = \frac{F_1 \cdot (y_1 + y_3)}{M_2 \cdot (y_2 + y_3)} \quad , \quad F_2 = M_2 \cdot a_2$$

where $y_1$ is a distance between the center of rotation $0$ and the horizontal surface 3, $y_2$ is a distance between the center of rotation $0$ and a center of the mass $M_2$, and $y_3$ equals radius $r$ of the center of rotation $0$.

6. The method according to claim 4, wherein for the type of foundation (2) being a foundation slab structure (2), the resistive force $R_{Q2}$ at the horizontal connecting surface (3) is calculated according to the following equation

$$R_{Q2} = R_{CON}(M_2) = M_1 \cdot g \cdot (tg\,\Phi + c)$$

where $\phi$ is the angle of internal friction and c is soil cohesion.

7. The method according to claim 4, wherein for the type of foundation (2) being the foundation slab structure (2), to the resistive force $R_{Q2}$ at the horizontal connecting surface (3) a gravitational passive resistive force $R_{PAS}$ is added according to following equation:

$$R_{Q2} = R_{CON}(M_2) = M_1 \cdot g \cdot (tg\,\Phi + c) + R_{PAS}$$

the passive resistive force $R_{PAS}$ is present when in addition to the foundation slab structure (2) the building structure (1) comprises underground structures.

8. The method according to claim 4, wherein for the type of foundation (2) being the foundation slab structure (2), to the resistive force $R_{Q2}$ at the horizontal connecting surface (3) a resistive force $R_{RES}$ is added according to following equation:

$$R_{Q2} = R_{CON}(M_2) = M_1 \cdot g \cdot (tg\,\Phi + c) + R_{RES}$$

the resistive force $R_{RES}$ is calculated for a retaining engineering structure, the resistive force $R_{RES}$ is present when in addition to the foundation slab structure (2) the building structure (1) comprises the retaining engineering structure, wherein the retaining engineering structure is implemented for the building structure (1) without underground structures.

9. The method according to claims 1 and 2, wherein for foundation with the support structure (2), the mass $M_2$ is calculated according to dimensions of the foundation with the support structure (2) where $D$ is a height of the foundation with the support structure (2) and $b$ is a width of the foundation with the support structure (2), the acceleration $a_2$ of the foundation with the support structure (2) is a function of the inertial force $F_1$ and the angle acceleration $\varepsilon$ of the mass $M_2$ around the center of rotation $0$ of the foundations with the support structure (2), the center $0$ is located at in a middle of a bottom surface of the foundation with the support structure (2), the acceleration $a_2$ of the foundation with the support structure (2) and the inertial force $F_2$ is calculated according the following equations

$$a_2 = \frac{2 \cdot F_1}{M_2} \quad , \quad F_2 = M_2 \cdot a_2 \; .$$

10. The method according to claims 1 and 2, wherein for the foundation pile structure (2) the mass $M_2$ is calculated by

determining a volume forming an outer circumference formed by the pile foundation structure (2).

11. The method according to claim 10, wherein for the pile foundation structure (2), the acceleration $a_2$ of pile foundation structure (2) is a function of the inertial force $F_1$ and an angle acceleration $\varepsilon$ of the mass $M_2$ around the center of rotation $0$ of the mass $M_2$, the acceleration $a_2$ of the pile foundation structure (2) and the inertial force $F_2$ is calculated according the following equations

$$a_2 = \frac{F_1 \cdot (y_1 + y_3)}{M_2 \cdot (y_2 + y_3)} \quad , \quad F_2 = M_2 \cdot a_2$$

where $y_1$ is a distance between the center of rotation $0$ and the horizontal surface (3), $y_2$ is a distance between the center of rotation $0$ and a center of the mass $M_2$, $y_3$ is a distance between the center of rotation $0$ and a total depth of the pile foundation structure (2), where for the pile foundation structure (2) the center of rotation $0$ of the mass $M_2$ is determined by the circular segment defined with the circle $S$, the circular segment is defined with two tangents, the first tangent is arranged at the starting point where the angle between horizontal surface of the bottom of the group of piles (2) and of the sliding surface is $45-\phi/2$, the starting point is arranged at a bottom edge of the group of piles (2), and the second tangent is arranged at the bisector of the circular segment where the tangent must be horizontal, where the radius $r$ of the center of rotation $0$ equals b/sin($45-\phi/2$) and $b$ is the width of the pile foundation structure (2).

12. The method according to claim 11, wherein the seismic force $Q$ of the horizontal connecting surface (3) is calculated according to following equation:

$$Q = M_1 \cdot a_1 + M_2 \cdot a_2$$

wherein the following condition has to be satisfied:

$$Q[N] < R_{Q2}[N]$$

wherein

$$R_{Q2} = R_{CON}(M_2) = \sum R_{PIL}$$

where $R_{PIL}$ is horizontal resistive force of each pile in the pile foundation structure (2), and $\Sigma R_{PIL}$ is a sum of horizontal resistive forces in the pile foundation structure (2).

13. The method according to claims 1 and 2, wherein for the pile foundation structure (2), the method further comprising calculating of a tension force in each pile as follows

$$N_P = \int \frac{\sigma_s \cdot d^2 \cdot \pi}{2} dh_s$$

wherein the following condition has to be satisfied

$$N_P < N_{PU}$$

and wherein

$$\Delta = \frac{(1 + \frac{N_P}{\sigma_b \cdot s^2}) \cdot 3 \cdot N_P \cdot ln\frac{s}{d}}{2 \cdot \pi \cdot h_s \cdot E_s}$$

wherein the following condition has to be satisfied

$$\Delta < \Delta_{admisible}$$

where is $\sigma_b$ is stress at the base of the group of piles 2, $d$ is diameter of each pile, $h_s$ is anchoring length of the piles, $N_{PU}$ is an ultimate tension force in each pile, $E_s$ is elasticity modulus of pile elements along length $h_s$, s is distance between piles, $\Delta$ is deformation of the group of piles (2), and $\Delta_{admisible}$ is admissible deformation of the group of piles (2).

14. A computer program comprising program code that, when executed by a processor, enables the processor to carry out a method according to any of the claims 1 to 13.

15. A record carrier storing a computer program according to claim 14.

FIG. 1

INDIVIDUAL FOUNDATION

FIG. 2

FIG. 3

Europäisches
Patentamt

European
Patent Office

Office européen
des brevets

## EUROPEAN SEARCH REPORT

**Application Number**

EP 24 02 0151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 107 358 A1 (NAT UNIVERSITY CORP SAITAMA UN [JP]) 7 October 2009 (2009-10-07) * paragraph [0035] - paragraph [0092]; figures 1,2 * ----- | 1-15 | INV. E02D27/34 |
| A | CA 2 436 257 A1 (CASTILLO SENAL ANGEL [ES]) 27 June 2002 (2002-06-27) * the whole document * ----- | 1-15 | |
| A | US 6 581 340 B2 (INNOVACION Y DISENO OROVAY S L [ES]) 24 June 2003 (2003-06-24) * page 4 - page 6; figures 1-4 * ----- | 1-15 | |

**TECHNICAL FIELDS
SEARCHED      (IPC)**

E02D

The present search report has been drawn up for all claims

| Place of search | Date of completion of the search | Examiner |
|---|---|---|
| Munich | 23 October 2024 | Geiger, Harald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ...............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 02 0151

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2024

| Patent document cited in search report | | Publication date | Patent family member(s) | | Publication date |
|---|---|---|---|---|---|
| EP 2107358 | A1 | 07-10-2009 | EP | 2107358 A1 | 07-10-2009 |
| | | | JP | 5077968 B2 | 21-11-2012 |
| | | | JP | WO2008117743 A1 | 15-07-2010 |
| | | | US | 2010030478 A1 | 04-02-2010 |
| | | | WO | 2008117743 A1 | 02-10-2008 |
| CA 2436257 | A1 | 27-06-2002 | AT | E317038 T1 | 15-02-2006 |
| | | | CA | 2436257 A1 | 27-06-2002 |
| | | | CN | 1489659 A | 14-04-2004 |
| | | | EP | 1344871 A1 | 17-09-2003 |
| | | | ES | 2176108 A1 | 16-11-2002 |
| | | | JP | 3789891 B2 | 28-06-2006 |
| | | | JP | 2004526076 A | 26-08-2004 |
| | | | MX | PA03005565 A | 15-10-2004 |
| | | | US | 2004068125 A1 | 08-04-2004 |
| | | | WO | 0250377 A1 | 27-06-2002 |
| US 6581340 | B2 | 24-06-2003 | AR | 039582 A1 | 02-03-2005 |
| | | | AT | E295916 T1 | 15-06-2005 |
| | | | AU | 3176701 A | 02-04-2002 |
| | | | AU | 2001231767 B2 | 09-02-2006 |
| | | | BR | 0114213 A | 21-10-2003 |
| | | | CA | 2422940 A1 | 21-03-2003 |
| | | | CN | 1462326 A | 17-12-2003 |
| | | | CO | 5320613 A1 | 30-09-2003 |
| | | | DE | 60110919 T2 | 04-05-2006 |
| | | | EC | SP014145 A | 23-04-2002 |
| | | | EG | 22749 A | 30-07-2003 |
| | | | EP | 1319759 A1 | 18-06-2003 |
| | | | ES | 2169683 A1 | 01-07-2002 |
| | | | GT | 200100192 A | 11-04-2002 |
| | | | HK | 1039027 A2 | 15-03-2002 |
| | | | HN | 2001000213 A | 01-02-2002 |
| | | | JP | 2004510075 A | 02-04-2004 |
| | | | KR | 20030038762 A | 16-05-2003 |
| | | | MX | PA03002516 A | 19-06-2003 |
| | | | PE | 20030180 A1 | 18-05-2003 |
| | | | SV | 2002000638 A | 24-10-2002 |
| | | | US | 2002035808 A1 | 28-03-2002 |
| | | | UY | 26944 A1 | 25-10-2001 |
| | | | WO | 0225020 A1 | 28-03-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 18759997 A

**Non-patent literature cited in the description**

- **S. TIMOSHENKO** ; **J.N. GOODIER**. Theory of Elasticity. 1951
- **BIOT, M. A.** *Proc.Natl.Acad. Sci.*, 1933
- **BOWLES, J.E.** Foundations Analysis and Design. 1996
- **COOKE, R. W.** *The settlement of friction pile foundations*, 1974
- **POULOS, H.G.** ; **DAVIS, E.H**. *Pile Foundation Analysis and Design*, 1980
- **TERZAGHI, K.** ; **PECK, R. B.** *Soil Mechanic in Engineering Practice*, 1967
- **S.P.TIMOSHENKO** ; **D.H. YOUNG**. Theory of Structures. 1965
- **TIMOSHENKO, P. S.** Strength of Materials. 1958
- **S. TIMOSHENKO** ; **D.H. YOUNG**. Advanced Dynamics. 1948
- **WHITAKER, T**. The Design of Piled Foundations. 1976